(19) **Europäisches Patentamt / European Patent Office / Office européen des brevets**

(11) **EP 2 449 258 B1**

(12) **EUROPÄISCHE PATENTSCHRIFT**

(45) Veröffentlichungstag und Bekanntmachung des Hinweises auf die Patenterteilung:
**26.08.2015 Patentblatt 2015/35**

(51) Int Cl.:
*F03D 7/04* (2006.01)    *F03D 9/00* (2006.01)
*F03D 11/02* (2006.01)    *F16H 3/72* (2006.01)

(21) Anmeldenummer: **10732248.9**

(22) Anmeldetag: **17.06.2010**

(86) Internationale Anmeldenummer:
**PCT/AT2010/000225**

(87) Internationale Veröffentlichungsnummer:
**WO 2011/000008 (06.01.2011 Gazette 2011/01)**

(54) **DIFFERENZIALGETRIEBE FÜR ENERGIEGEWINNUNGSANLAGE UND VERFAHREN ZUM BETREIBEN**

DIFFERENTIAL GEARING FOR AN ENERGY GENERATION PLANT AND OPERATING METHOD

ENGRENAGE DIFFÉRENTIEL DESTINÉ À UNE INSTALLATION DE PRODUCTION D'ÉNERGIE ET PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **02.07.2009 AT 10352009**

(43) Veröffentlichungstag der Anmeldung:
**09.05.2012 Patentblatt 2012/19**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
WO-A1-2006/010190    WO-A2-2009/016508
JP-A- 2004 339 953    JP-A- 2007 040 239
US-A1- 2008 054 643

**Beschreibung**

Die Erfindung betrifft ein Differenzialgetriebe für eine Energiegewinnungsanlage, insbesondere für eine Windkraftanlage, mit drei An- bzw. Abtrieben, wobei ein erster Antrieb mit einer Antriebswelle der Energiegewinnungsanlage, ein Abtrieb mit einem mit einem Netz verbindbaren Generator und ein zweiter Antrieb mit einer elektrischen Maschine als Differenzial-Antrieb verbunden ist.

Die Erfindung betrifft des Weiteren ein Verfahren zum Betreiben eines Differentialgetriebes für eine Energiegewinnungsanlage, insbesondere für eine Windkraftanlage, mit drei An- bzw. Abtrieben, wobei ein erster Antrieb mit einer Antriebswelle der Energiegewinnungsanlage, ein Abtrieb mit einem mit einem Netz verbindbaren Generator und ein zweiter Antrieb mit einer elektrischen Maschine als Differential-Antrieb verbunden ist.

Ein derartiges Differentialgetriebe und ein derartiges Verfahren sind aus der WO 2006/010190 A1, der US 2008/054643 A1 und der WO 2009/016508 A2 bekannt.

Windkraftwerke gewinnen zunehmend an Bedeutung als Elektrizitätserzeugungsanlagen. Dadurch erhöht sich kontinuierlich der prozentuale Anteil der Stromerzeugung durch Wind. Dies wiederum bedingt einerseits neue Standards bezüglich Stromqualität und andererseits einen Trend zu noch größeren Windkraftanlagen. Gleichzeitig ist ein Trend Richtung Off-shore-Windkraftanlagen erkennbar, welcher Anlagengrößen von zumindest 5MW installierter Leistung fordert. Durch die hohen Kosten für Infrastruktur und Wartung bzw. Instandhaltung der Windkraftanlagen im Offshore-Bereich gewinnen hier sowohl Wirkungsgrad als auch Verfügbarkeit der Anlagen eine besondere Bedeutung.

Allen Anlagen gemeinsam ist die Notwendigkeit einer variablen Rotordrehzahl, einerseits zur Erhöhung des aerodynamischen Wirkungsgrades im Teillastbereich und andererseits zur Regelung des Drehmomentes im Antriebsstrang der Windkraftanlage. Letzteres zum Zweck der Drehzahlregelung des Rotors in Kombination mit der Rotorblattverstellung. Derzeit sind großteils Windkraftanlagen im Einsatz, welche diese Forderung durch Einsatz von drehzahlvariablen Generator-Lösungen in der Form von sogenannten doppeltgespeisten Drehstrommaschinen bzw. Synchrongeneratoren in Kombination mit Frequenzumrichtern erfüllen. Diese Lösungen haben jedoch den Nachteil, dass (a) das elektrische Verhalten der Windkraftanlagen im Fall einer Netzstörung nur bedingt den Anforderungen der Elektrizitätsversorgungsunternehmen erfüllt, (b) die Windkraftanlagen nur mittels Transformatorstation an das Mittelspannungsnetz anschließbar sind und (c) die für die variable Drehzahl notwendigen Frequenzumrichter sehr leistungsstark und daher eine Quelle für Wirkungsgradverluste sind.

Diese Probleme können durch den Einsatz von fremderregten Mittelspannungs-Synchrongeneratoren gelöst werden. Hierbei bedarf es jedoch alternativer Lösungen um die Forderung nach variabler Rotor-Drehzahl bzw. Drehmomentregelung im Triebstrang der Windkraftanlage zu erfüllen. Eine Möglichkeit ist der Einsatz von Differenzialgetrieben welche durch Veränderung des Übersetzungsverhältnisses bei konstanter Generatordrehzahl, eine variable Drehzahl des Rotors der Windkraftanlage erlauben.

WO2004/109157 A1 zeigt ein komplexes, hydrostatisches "Mehrwege"-Konzept mit mehreren parallelen Differenzialstufen und mehreren schaltbaren Kupplungen, wodurch zwischen den einzelnen Wegen geschaltet werden kann. Mit der gezeigten technischen Lösung können die Leistung und somit die Verluste der Hydrostatik reduziert werden. Ein wesentlicher Nachteil ist jedoch der komplizierte Aufbau der gesamten Einheit. Darüber hinaus stellt die Schaltung zwischen den einzelnen Stufen ein Problem bei der Regelung der Windkraftanlage dar.

EP 1283359 A1 zeigt ein 1-stufiges Differenzialgetriebe mit elektrischem Differenzial-Antrieb, mit einer um die Eingangswelle koaxial positionierten Sonder-Drehstrommaschine mit niedriger Nenndrehzahl, und einer großen Nennleistung - im Verhältnis zum realisierten Drehzahlbereich.

Die Nachteile bekannter Ausführungen sind einerseits hohe Verluste im Differenzial-Antrieb bzw. andererseits bei Konzepten die dieses Problem lösen, komplexe Mechanik bzw. Sonder-Elektromaschinenbau und damit hohe Kosten. Bei hydrostatischen Lösungen ist darüber hinaus die Lebensdauer der eingesetzten Pumpen ein Problem bzw. ein hoher Aufwand bei Anpassung an extreme Umgebungsbedingungen erforderlich. Generell ist festzustellen, dass die gewählten Nenn-Drehzahlbereiche entweder für die Ausregelung von Extrembelastungen zu klein oder für einen optimalen Energieertrag der Windkraftanlage zu groß sind.

Aufgabe der Erfindung ist oben genannte Nachteile weitgehend zu vermeiden und einen Differenzial-Antrieb zur Verfügung zu stellen, welcher neben geringstmöglichen Kosten sowohl maximalen Energieertrag als auch optimale Regelung der Windkraftanlage gewährleistet.

Gelöst wird diese Aufgabe mit einem Differenzialgetriebe mit den Merkmalen des Anspruchs 1.

Gelöst wird diese Aufgabe des weiteren mit einem Verfahren mit den Merkmalen der Ansprüche 14 und/oder 15.

Bevorzugte Ausführungsformen der Erfindung sind Gegenstand der Unteransprüche.

Durch die Festlegung des Übersetzungsverhältnisses des Differenzialgetriebes wird für niedrige Strömungsgeschwindigkeiten der Drehzahlbereich des Rotors der Energiegewinnungsanlage nach unten wesentlich erweitert, da der Differenzial-Antrieb als alleiniger Generator am Netz angeschlossen bleibt (der Hauptgenerator ist vom Netz getrennt), damit geringere Rotordrehzahlen erlaubt und dadurch der Jahresenergieertrag der Energiegewinnungsanlage entsprechend erhöht wird.

Nachfolgend werden bevorzugte Ausführungsformen der Erfindung unter Bezugnahme auf die angeschlossenen Zeichnungen detailliert beschrieben.

Fig. 1 zeigt für eine 5MW Windkraftanlage gemäß Stand der Technik die Leistungskurve, die Rotordrehzahl und die sich dadurch ergebenden Kennwerte wie Schnelllaufzahl und den Leistungsbeiwert,

Fig. 2 zeigt das Prinzip eines Differenzialgetriebes mit einem elektrischen Differenzial-Antrieb gemäß Stand der Technik,

Fig. 3 zeigt das Prinzip eines koaxial zur Eingangswelle der Differenzialstufe ausgerichteten Drehstrommaschine,

Fig. 4 zeigt die Drehzahlverhältnisse am Rotor der Wndkraftanlage und die sich dadurch ergebenden maximalen Eingangs-Drehmomente $M_{max}$ für den Differenzial-Antrieb,

Fig. 5 zeigt beispielhaft die Drehzahl- und Leistungsverhältnisse eines elektrischen Differenzial-Antriebes über der Windgeschwindigkeit,

Fig. 6 zeigt die Differenz des Brutto-Energieertrags für verschiedene Nenn-Drehzahlbereiche bei unterschiedlichen mittleren Jahreswindgeschwindigkeiten für einen elektrischen Differenzial-Antrieb mit 80% Feldschwächebereich,

Fig. 7 zeigt eine mögliche, erfindungsgemäße Lösung mit einer Bremse zwischen Differenzial-Antrieb und Rotorwelle des Synchrongenerators,

Fig. 8 zeigt die Drehzahl-Kennlinien von Differenzial-Antrieb und Antriebswelle für die erfindungsgemäße Ausführungsform eines Differenzialgetriebes,

Fig. 9 zeigt eine alternative Ausführungsform eines Differenzialgetriebes mit einer Bremse zwischen einem mit der Antriebswelle der Energiegewinnungsanlage verbundenen ersten Antrieb und dem Differenzial-Antrieb.

Die Leistung des Rotors einer Windkraftanlage errechnet sich aus der Formel

$$\text{Rotor-Leistung} = \text{Rotorfläche} * \text{Leistungsbeiwert} * \text{Luftdichte}/2 * \text{Windgeschwindigkeit}^3$$

wobei der Leistungsbeiwert abhängig von der Schnelllaufzahl (= Verhältnis Blattspitzen-Geschwindigkeit zu Windgeschwindigkeit) des Rotors der Windkraftanlage ist. Der Rotor einer Windkraftanlage ist für einen optimalen Leistungsbeiwert basierend auf einer im Zuge der Entwicklung festzulegenden Schnelllaufzahl (meist ein Wert zw. 7 und 9) ausgelegt. Aus diesem Grund ist beim Betrieb der Windkraftanlage im Teillastbereich eine entsprechend kleine Drehzahl einzustellen, um einen optimalen aerodynamischen Wirkungsgrad zu gewährleisten.

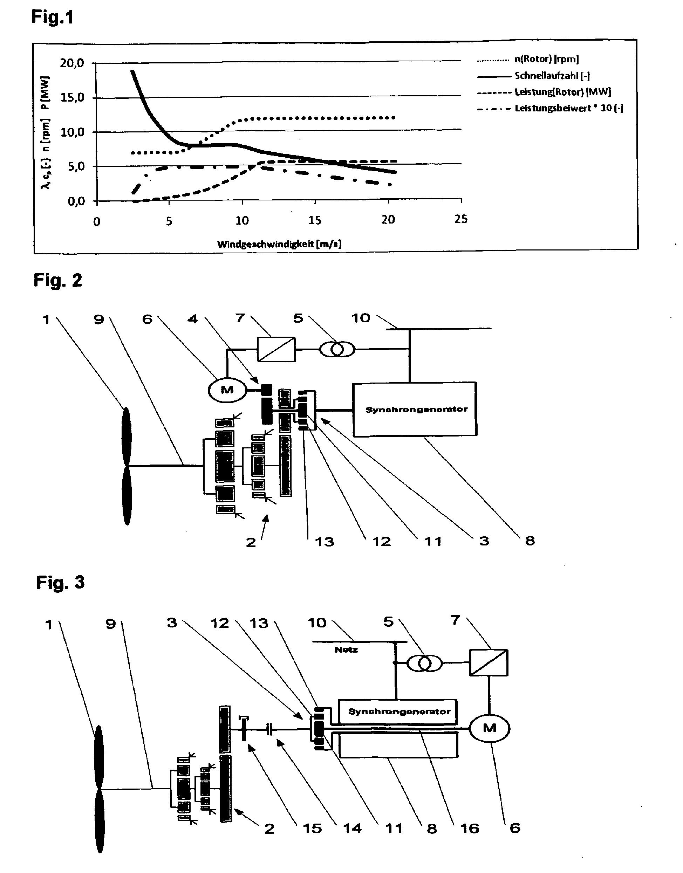

Fig. 1 zeigt die Verhältnisse für Rotorleistung, Rotordrehzahl, Schnelllaufzahl und Leistungsbeiwert für einen vorgegebenen maximalen Drehzahlbereich des Rotors bzw. einer optimalen Schnelllaufzahl von 8,0-8,5. Aus dem Diagramm ist ersichtlich, dass sobald die Schnelllaufzahl von ihrem optimalen Wert von 8,0-8,5 abweicht, der Leistungsbeiwert sinkt, und sich damit gemäß oben genannter Formel die Rotorleistung entsprechend der aerodynamischen Charakteristik des Rotors reduziert.

Fig. 2 zeigt ein mögliches Prinzip eines Differenzialsystems für eine Windkraftanlage bestehend aus Differenzialstufe 3 bzw. 11 bis 13, einer Anpassungs-Getriebestufe 4 und einem Differenzial-Antrieb 6. Der Rotor 1 der Windkraftanlage, der auf der Antriebswelle 9 für das Hauptgetriebe 2 sitzt, treibt das Hauptgetriebe 2 an. Das Hauptgetriebe 2 ist ein 3-stufiges Getriebe mit zwei Planetenstufen und einer Stirnradstufe. Zwischen Hauptgetriebe 2 und Generator 8 befindet sich die Differenzialstufe 3, welche vom Hauptgetriebe 2 über Planetenträger 12 der Differenzialstufe 3 angetrieben wird. Der Generator 8 - vorzugsweise ein fremderregter Synchrongenerator, der bei Bedarf auch eine Nennspannung größer 20kV haben kann - ist mit dem Hohlrad 13 der Differenzialstufe 3 verbunden und wird von diesem angetrieben. Das Ritzel 11 der Differenzialstufe 3 ist mit dem Differenzial-Antrieb 6 verbunden. Die Drehzahl des Differenzial-Antriebes 6 wird geregelt, um einerseits bei variabler Drehzahl des Rotors 1 eine konstante Drehzahl des Generators 8 zu gewährleisten und andererseits das Drehmoment im kompletten Triebstrang der Windkraftanlage zu regeln. Um die Eingangsdrehzahl für den Differenzial-Antrieb 6 zu erhöhen wird im gezeigten Fall ein 2-stufiges Differenzialgetriebe gewählt, welches eine Anpassungs-Getriebestufe 4 in Form einer Stirnradstufe zwischen Differenzialstufe 3 und Differenzial-Antrieb 6 vorsieht. Differenzialstufe 3 und Anpassungs-Getriebestufe 4 bilden somit das 2-stufige Differenzialgetriebe. Der Differenzial-Antrieb ist eine Drehstrommaschine, welche über Frequenzumrichter 7 und Transformator 5 ans Netz 10 angeschlossen wird.

Fig. 3 zeigt eine weitere mögliche Ausführungsform des Differenzialgetriebes. Der Rotor 1 treibt das Hauptgetriebe 2 an und dieses über Planententräger 12 die Differenzialstufe 11 bis 13. Der Generator 8 ist mit dem Hohlrad 13 verbunden und das Ritzel 11 mit dem Differenzial-Antrieb 6. Das Differenzialgetriebe 3 ist 1-stufig, und der Differenzial-Antrieb 6 ist in koaxialer Anordnung sowohl zur Abtriebswelle des Hauptgetriebes 2, als auch zur Antriebswelle des Generators 8. Beim Generator 8 ist eine Hohlwelle vorgesehen, welche erlaubt, dass der Differenzial-Antrieb 6 an der dem Differenzialgetriebe abgewandten Seite des Generators 8 positioniert wird. Dadurch ist die Differenzialstufe vorzugsweise eine separate, an den Generator 8 angebundene Baugruppe, welche dann vorzugsweise über eine Kupplung 14 und eine Hauptbremse 15 mit dem Hauptgetriebe 2 verbunden ist. Die Verbindungswelle 16 zwischen Ritzel 11 und Differenzial-Antrieb 6 kann vorzugsweise in einer besonders Massenträgheitsmoment-armen, drehsteifen Ausführungsvariante als z.B. Faserverbund-Rohrwelle mit Glasfaser und/oder Kohlefaser ausgeführt sein.

Die Drehzahlgleichung für das Differenzialgetriebe lautet:

$$\text{Drehzahl}_{\text{Generator}} \ = \ x * \text{Drehzahl}_{\text{Rotor}} \ + \ y * \text{Drehzahl}_{\text{Differenzial-Antrieb}},$$

wobei die Generatordrehzahl konstant ist, und sich die Faktoren x und y aus den gewählten Getriebeübersetzungen von Hauptgetriebe und Differenzialgetriebe ableiten lassen. Das Drehmoment am Rotor wird durch das anstehende Windangebot und den aerodynamischen Wirkungsgrad des Rotors bestimmt. Das Verhältnis zwischen dem Drehmoment an der Rotorwelle und dem am Differenzial-Antrieb ist konstant, wodurch sich das Drehmoment im Triebstrang durch den Differenzial-Antrieb regeln lässt. Die Drehmomentgleichung für den Differenzial-Antrieb lautet:

$$\text{Drehmoment}_{\text{Differenzial-Antrieb}} \ = \ \text{Drehmoment}_{\text{Rotor}} * y / x \, ,$$

wobei der Größenfaktor y/x ein Maß für das notwendige Auslegungs-Drehmoment des Differenzial-Antriebes ist.

Die Leistung des Differenzial-Antriebes ist im Wesentlichen proportional dem Produkt aus prozentueller Abweichung der Rotordrehzahl von dessen Grunddrehzahl (Rotor-Drehzahl, bei der der Differenzial-Antrieb die Drehzahl gleich 0 hat) mal Rotor-Leistung. Dementsprechend erfordert ein großer Drehzahlbereich grundsätzlich eine entsprechend große Dimensionierung des Differenzial-Antriebes.

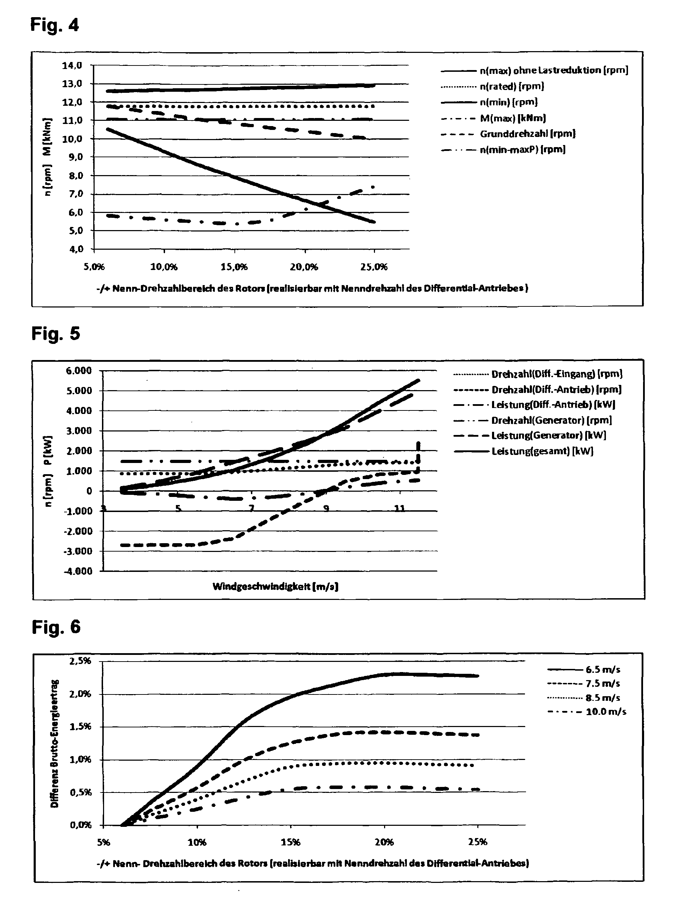

Fig. 4 zeigt dies beispielhaft für verschiedene Drehzahlbereiche. Der -/+Nenn-Drehzahlbereich des Rotors definiert dessen prozentuelle Drehzahlabweichung von der Grunddrehzahl des Rotors, der mit Nenndrehzahl des Differenzial-Antriebs (- ... motorisch bzw. + ... generatorisch) ohne Feldschwächung realisiert werden kann. Die Nenndrehzahl (n) des Differenzial-Antriebes definiert im Falle einer elektrischen Drehstrommaschine jene maximale Drehzahl, bei der diese dauerhaft das Nenndrehmoment ($M_n$) bzw. die Nennleistung ($P_n$) erbringen kann.

Im Nennleistungsbereich dreht der Rotor der Windkraftanlage mit der mittleren Drehzahl $n_{rated}$ zwischen den Grenzen $n_{max}$ und $n_{min-maxP}$, im Teillastbereich zwischen $n_{rated}$ und $n_{min}$, in diesem Beispiel erzielbar mit einem Feldschwächebereich von 80% (das entspricht einer maximalen Drehzahl des Differenzial-Antriebs von 1,8-facher Nenn-Drehzahl). Der Regelungs-Drehzahlbereich zwischen $n_{max}$ und $n_{min-maxP}$, welcher ohne Lastreduktion realisierbar ist, wird entsprechen groß gewählt, um Windböen ausregeln zu können. Die Größe dieses Drehzahlbereiches hängt von der Böigkeit des Windes bzw. der Massenträgheit des Rotors der Windkraftanlage und der Dynamik des sog. Pitch-Systems (Rotorblatt-Verstellsystem) ab, und liegt üblicherweise bei etwa -/+5%. Im gezeigten Beispiel wurde ein Regelungs-Drehzahlbereich von -/+6% gewählt um entsprechende Reserven für die Ausregelung von Extremböen mit Hilfe von Differenzial-Antrieben zu haben. In diesem Regelungs-Drehzahlbereich muss die Windkraftanlage Nennleistung produzieren, was bedeutet, dass der Differenzial-Antrieb dabei mit maximalem Drehmoment belastet wird. Das heißt, dass der -/+Nenn-Drehzahlbereich des Rotors zumindest etwa gleich groß sein muss, da nur in diesem Bereich der Differenzial-Antrieb sein Nenndrehmoment leisten kann.

Bei elektrischen und hydrostatischen Differenzial-Antrieben mit einer Differenzialstufe wird die Rotor-Drehzahl, bei der der Differenzial-Antrieb die Drehzahl gleich 0 hat, die Grunddrehzahl genannt. Da nun bei kleinen Rotor-Drehzahlbereichen die Grunddrehzahl über $n_{min-maxP}$ liegt, muss der Differenzial-Antrieb das Nenndrehmoment bei Drehzahl gleich 0 erbringen können. Differenzial-Antriebe, sei es elektrisch oder auch hydraulisch, können jedoch bei Drehzahl gleich 0 nur ein Drehmoment erzeugen, welches deutlich unter dem Nennmoment liegt, was nur durch eine entsprechende Überdimensionierung bei der Auslegung kompensiert werden kann. Dementsprechend ergibt sich für dieses Ausführungsbeispiel, ein in diesem Sinne optimaler minimaler Nenn-Drehzahlbereich von rund -/+14%.

In Fig. 5 sieht man beispielhaft die Drehzahl- bzw. Leistungsverhältnisse für eine Differenzialstufe mit einem Nenn-Drehzahlbereich von -/+14%. Die Drehzahl des Generators, vorzugsweise ein fremderregter Mittelspannungs-Synchrongenerator ist durch den Anschluss an das frequenzfeste Stromnetz konstant. Um den Differenzial-Antrieb entsprechend gut ausnutzen zu können, wird dieser Antrieb im Bereich kleiner der Grunddrehzahl motorisch und im Bereich größer der Grunddrehzahl generatorisch betrieben. Das führt dazu, dass im motorischen Bereich Leistung in die Differenzialstufe eingespeist wird und im generatorischen Bereich Leistung der Differenzialstufe entnommen wird. Diese Leistung wird im Falle eines elektrischen Differenzial-Antriebes vorzugsweise dem Netz entnommen bzw. in dieses eingespeist. Im Falle eines hydraulischen Differenzial-Antriebes wird die Leistung vorzugsweise der Generator-Antriebswelle entnommen bzw. dieser zugeführt. Die Summe aus Generatorleistung und Leistung Differenzial-Antrieb ergibt die für einen elektrischen Differenzial-Antrieb ins Netz abgegebene Gesamtleistung.

Fig. 6 zeigt die Differenz des Brutto-Energieertrages der Windkraftanlage mit elektrischem Differenzial-Antrieb bei verschiedenen mittleren Jahreswindgeschwindig-keiten abhängig vom Nenn-Drehzahlbereich des Rotors der Windkraftanlage. Dabei basiert der Brutto-Energieertrag auf der Abgabeleistung des Rotors der Windkraftanlage abzüglich der Verluste von Differenzial-Antrieb (inkl. Frequenz-umrichter) und Differenzialgetriebe.

Die mittlere Jahreswindgeschwindigkeit ist dabei das jährliche Mittel der in Nabenhöhe (entspricht dem Rotormittelpunkt) gemessenen Windgeschwindigkeit. Die maximalen mittleren Jahreswindgeschwindigkeiten von 10,0m/s, 8,5m/s, 7,5m/s und 6,0m/s entsprechen den sogenannten IEC-Typenklassen 1, 2, 3 und 4. Als statistische Häufigkeitsverteilung wird standardmäßig eine Rayleigh-Verteilung angenommen.

Ein Nenn-Drehzahlbereich von -/+ 6% ist die dem Beispiel zugrunde gelegte Basis, welcher durch den minimal erforderlichen Regelungs-Drehzahlbereich im Nennleistungsbereich von Windkraftanlagen mit Differenzial-Antrieben erforderlich ist, wobei der Nenn-Drehzahlbereich jenen Rotor-Drehzahlbereich bedeutet, den man mit Nenndrehzahl des Differenzial-Antriebes realisieren kann. Darüber hinaus wird ein Feldschwächebereich von bis zu 80% über Nenn-Drehzahl des Differenzial-Antriebes angenommen. Aus der Grafik ist unschwer zu erkennen, dass für niedrige mittlere Jahreswindgeschwindigkeiten das Optimum bei einem Nenn-Drehzahlbereich von etwa - /+ 20% erreicht wird, und eine Erweiterung des Nenn-Drehzahlbereiches darüber hinaus keine Vorteile mehr bringt, da die höheren Wirkungsgradverluste durch den größeren Differenzial-Antrieb, die Wirkungsgradgewinne durch den größeren Drehzahlbereich aufheben, bzw. übertreffen. Dieses Optimum verschiebt sich für höhere mittlere Jahreswindgeschwindigkeiten Richtung -/+15% Nenn-Drehzahlbereich.

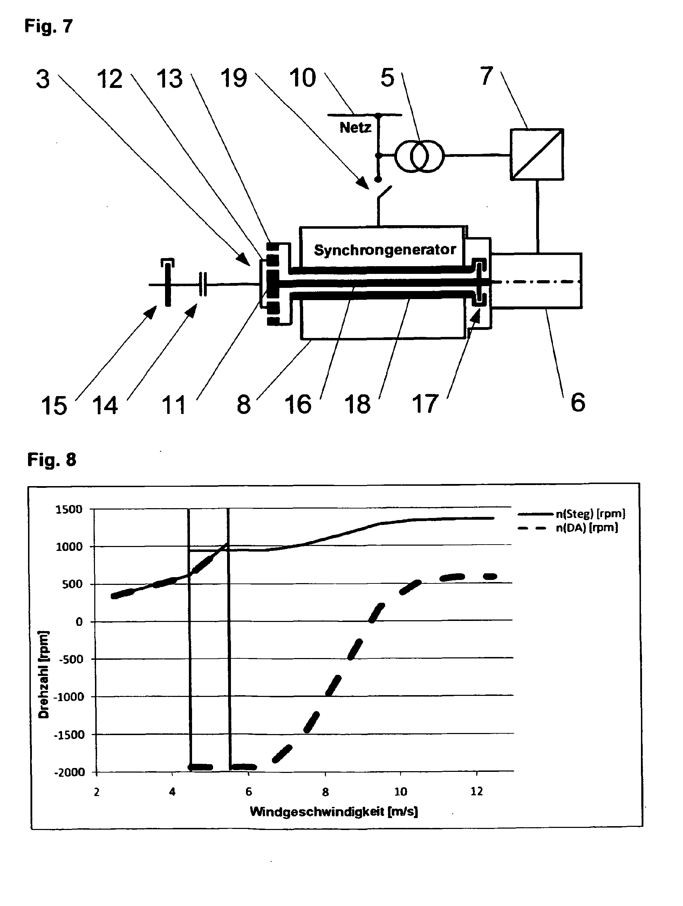

Fig. 7 zeigt eine erfindungsgemäße Ausführungsform eines Differenzialgetriebes. Dem System, wie grundsätzlich in Fig. 3 beschrieben, wird eine rotierende Bremse 17 hinzugefügt, welche, sobald sie aktiviert ist, die Verbindungswelle 16 des Differenzial-Antriebes 6 drehfest mit der Rotorwelle 18 des Synchrongenerators 8 verbindet. Die Bremse 17 besteht in der gezeigten Ausführungsvariante aus einem oder mehreren Bremssätteln, welche mit der Rotorwelle 18 des Synchrongenerators 8 verbunden sind, und einer oder mehreren mit der Verbindungswelle 16 verbundenen Bremsscheiben. Ebenso können aber die Bremssättel mit der Verbindungswelle 16 bzw. die Bremsscheibe(n) mit der Rotorwelle 18 verbunden sein.

Der Rotor der Windkraftanlage hat beispielsweise einen -/+ Nenn-Drehzahlbereich von 14%, wodurch sich bei einer Standübersetzung des Differenzial-Getriebes 3 von etwa -5, für den gezeigten Differenzial-Antrieb eine Nenndrehzahl von 1075rpm ergibt. Dies erlaubt bei klassischem Betrieb der Windkraftanlage - d.h. bei nicht aktivierter Bremse 17 - und dem Betrieb des Differenzial-Antriebes 6 mit bis zu 80% Feldschwächebereich, eine minimale Drehzahl des Rotors der Windkraftanlage von 8,3rpm (vergl. Fig. 4). Bei einer Einschalt-Windgeschwindigkeit von 3m/s ergibt sich dadurch eine Schnelllaufzahl des Rotors von rund 19 mit einem Leistungsbeiwert von rund 0,12. Dies bedeutet jedoch eine massive Verschlechterung des Energieertrages - im Vergleich zu einem maximal möglichen Leistungsbeiwert von rund 0,49.

Wenn man nun Fig. 5 genau betrachtet, so kann man erkennen, dass unterhalb einer Windgeschwindigkeit von 7m/s die Drehzahl an der Antriebswelle 16 maximal etwa 1000rpm, das ist ca. die Nenndrehzahl des Differenzial-Antriebes, erreicht. Das heißt, bei drehfester Verbindung von Antriebswelle 16 und Rotorwelle 18 des Synchrongenerators 8 durch die angezogene Bremse 17, kann man den Differenzial-Antrieb 6 als Generator verwenden, der mittels Umrichter 7 und Transformator 5 an das Netz 10 geschaltet wird, bei gleichzeitiger Trennung des Synchrongenerators 8 vom Netz - mittels z.B. Schalter 19.

Der Differenzial-Antrieb ist vorzugsweise eine Drehstrommaschine (z.B. klassische Asynchronmaschine oder eine besonders massenträgheitsarme, permanentmagneterregte Synchronmaschine), welche in Verbindung mit einem Frequenzumrichter 7 einen einsatzspezifisch großen Drehzahlbereich (d.h. von Drehzahl gleich Null bis in den maximalen Feldschwächebereich - z.B. 1,8-fache Nenndrehzahl) ermöglicht. Damit wird die Drehzahl des Differenzial-Antriebes so eingestellt, dass die optimale Schnelllaufzahl am Rotor der Windkraftanlage realisiert werden kann.

Fig. 8 zeigt beispielhaft Kennlinien beider Betriebsarten, welche sich zwischen einer mittleren Windgeschwindigkeit von 4,5m/s und 5,5m/s überlappen (Bereich gekennzeichnet durch zwei vertikale Linien). Aufgrund der stochastischen Verteilung der Windgeschwindigkeit ist diese Hysterese notwendig, um ein ständiges hin- und herschalten zwischen den zwei Betriebsarten zu vermeiden. D.h. je größer diese Hysterese ist, desto weniger oft muss von einer Betriebsart in die andere geschaltet werden. Dabei ist die Betriebsart mit "Differenzial-Antrieb 6 als Generator" durch die Nennleistung des Differential-Antriebes 6 begrenzt. Bei Betriebsart "Synchrongenerator 8 am Netz", ist der Drehzahlbereich durch den gewählten -/+ Nenn-Drehzahlbereich, bzw. durch den gewählten Feldschwächebereich des Differenzial-Antriebes 6 begrenzt. Ein weiterer Vorteil ist, dass im Bereich kleiner Leistungsabgabe der Wirkungsgrad des Differenzial-Antriebes 6 wesentlich besser als der des um ein Vielfaches größeren Synchrongenerators 8 ist.

Durch diese Erweiterung des Drehzahlbereiches des Rotors der Windkraftanlage kann der Jahresenergieertrag der Windkraftanlage um bis zu 1,5% erhöht werden. Darüber hinaus kann der -/+Nenndrehzahlbereich des Rotors der Windkraftanlage auf ein regelungstechnisch notwendiges Minimum reduziert werden, da bei Betriebsart "Differenzial-Antrieb 6 als Generator", bei niedrigen Windgeschwindigkeiten die Drehzahl des Differenzial-Antriebes 6 ohne wesentliche Einschränkungen beliebig abgesenkt werden kann. Damit wird die Größe des Differenzial-Antriebes auf ein Kostenoptimum reduziert.

Der Schaltvorgang zwischen den beiden Betriebsarten kann folgendermaßen erfolgen. Befindet man sich in der Betriebsart "Differenzial-Antrieb 6 als Generator" und will - aufgrund steigender mittlerer Windgeschwindigkeit - auf die zweite Betriebsart "Synchrongenerator 8 am Netz" schalten, so wird zuerst die Leistung der Windkraftanlage mittels Rotorblattverstellung auf ca. Null geregelt, und im nächsten Schritt die Bremse 17 gelöst. Anschließend wird der Synchrongenerator 8 mittels Differenzial-Antrieb 6 mit dem Netz synchronisiert. Sobald dies erfolgt ist, kann der Schalter 19 geschlossen werden, womit der Synchrongenerator 8 am Netz ist, und im Folgenden die Windkraftanlage wieder in Produktionsbetrieb gehen kann. Dieser Vorgang dauert nur einige Sekunden, und bewirkt dadurch keine nennenswerte Einbuße bezüglich Energieertrag der Windkraftanlage.

Befindet man sich in der Betriebsart "Synchrongenerator 8 am Netz" und will - aufgrund fallender mittlerer Windgeschwindigkeit - auf die zweite Betriebsart "Differenzial-Antrieb 6 als Generator" schalten, so wird zuerst ebenfalls die Leistung der Windkraftanlage mittels Rotorblattverstellung auf ca. Null geregelt. Anschließend wird der Synchrongenerator 8 durch Öffnen des Schalters 19 einfach vom Netz getrennt, dann die Drehzahl des Differenzial-Antriebes 6 auf ca. die Drehzahl der Rotorwelle 18 des Synchrongenerators 8 gebracht und anschließend die Bremse 17 aktiviert. Im Folgenden kann die Windkraftanlage wieder in Produktionsbetrieb gehen. Eine einfache Abbremsung des Differenzial-Antriebes 6 ist alternativ ebenfalls möglich, verursacht jedoch eine höhere Belastung der Bremse 17.

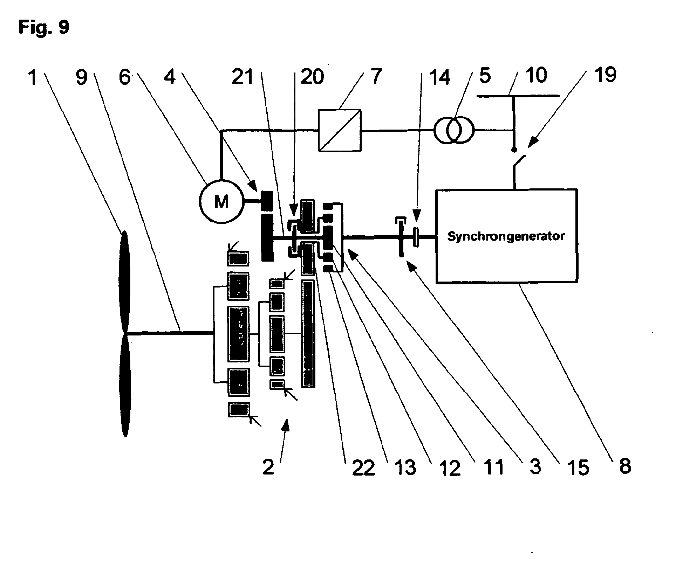

Fig. 9 zeigt eine alternative Ausführungsform eines Differenzialgetriebes mit einer lösbaren, drehfesten Verbindung. Dem System, wie grundsätzlich in Fig. 2 beschrieben, wird eine Bremse 20 zwischen Ritzelwelle 21 und dem mit dem Planetenträger 12 des Differenzialgetriebes 3 verbundenen Zahnrad 22 der Stirnradstufe des Hauptgetriebes 2 implementiert. Die Bremse 20 besteht in der gezeigten Ausführungsvariante aus einem oder mehreren Bremssätteln, welche mit dem Zahnrad 22 verbunden sind, und einer oder mehreren mit der Ritzelwelle 21 verbundenen Bremsscheiben. Es ergibt sich dadurch der gleiche Effekt wie zu Fig. 7 für eine Bremse 17 zwischen Antriebswelle 16 und Rotorwelle 18 des Synchrongenerators 8 beschrieben.

D.h. dieses Prinzip funktioniert sobald zwei beliebige Wellen der drei An- bzw. Abtriebe eines Differenzialgetriebes drehfest miteinander verbunden werden, und damit die Übersetzung des Differenzialgetriebes 3 gleich 1 ist. Selbstverständlich ist auch jede andere Lösung denkbar, mit der das Differenzialgetriebe 3 gesperrt werden kann, sodass dessen Übersetzung auf 1 festlegbar ist, wie zum Beispiel mit zumindest einem blockierten Planetenrad des Planetenträgers 12.

Anstelle der beschriebenen Bremse zur drehfesten Verbindung zweier beliebiger Wellen der drei An- bzw. Abtriebe eines Differenzialgetriebes kann z.B. auch jede Art von Kupplung (z.B. Lamellen - oder Klauenkupplung) eingesetzt werden, wobei bei z.B. Einsatz einer Klauenkupplung die Synchronisation der drehfest zu verbindenden Wellen vergleichsweise komplizierter ist, als mit z.B. einer Bremse oder einer Lamellenkupplung.

Bei der Auslegung von Differenzial-Antrieben sind darüber hinaus noch weitere wichtige Sonderfälle zu betrachten. So kann zum Beispiel durch das konstante Verhältnis RotorDrehzahl zu Drehzahl am Differenzial-Antrieb, ein Ausfall des Differenzial-Antriebes schwerwiegende Schäden nach sich ziehen. Ein Beispiel ist der Ausfall des Differenzial-Antriebes bei Nennbetrieb der Windkraftanlage. Dadurch geht gleichzeitig das übertragbare Drehmoment am Triebstrang gegen null. Die Drehzahl des Rotors der Windkraftanlage wird in diesem Fall z.B. durch ein schnelles Verstellen der Rotorblattverstellung schlagartig reduziert und der Generator vom Netz getrennt. Aufgrund der relativ hohen Massenträgheit des Generators, wird dieser nur langsam seine Drehzahl ändern. Dadurch ist, sofern der Differenzial-Antrieb nicht ohne Verzögerung sein Drehmoment zumindest teilweise aufrecht erhalten kann, eine Überdrehzahl des Differenzial-Antriebes unvermeidbar.

Aus diesem Grund ist z.B. beim Einsatz von hydrostatischen Differenzial-Antrieben eine mechanische Bremse vorgesehen, welche bei Ausfall des Differenzial-Antriebes für den Triebstrang schädigende Überdrehzahlen verhindert. Die WO2004/109157 A1 zeigt zu diesem Zweck eine mechanische Bremse mit gehäusefesten Bremssätteln, welche direkt auf die Generatorwelle wirkt und damit den Generator entsprechend abbremsen kann.

Gleichermaßen kann man jedoch auch die Bremse 17 bzw. 20 verwenden, um eine schädigende Überdrehzahl zu vermeiden. Die sich dabei einstellende maximale Drehzahl des Differenzial-Antriebes entspricht dann der maximalen Drehzahl des Rotors der Windkraftanlage multipliziert mit dem Übersetzungsverhältnis des Hauptgetriebes 2 - das sind z.B. im beschriebenen Beispiel gemäß Fig. 7 rund 1500rpm. Die Bremse 17 bzw. 20 kann aus Sicherheitsgründen als sogenannte Sicherheitsbremse (sogenannte fail-safe-Bremse) ausgeführt werden, was bedeutet, dass sie gegen Federkraft geöffnet und damit bei Ausfall der Versorgungsenergie automatisch aktiviert wird.

Die Ausführungsvarianten gemäß Fig. 7 und Fig. 9 unterscheiden sich jedoch wesentlich bezüglich den Auswirkungen einer sogenannten Notbremsung der Windkraftanlage mittels Hauptbremse 15. Geht man davon aus, dass bei Aktivierung der Hauptbremse 15 üblicherweise ein Bremsmoment von bis zu 2,5-fachem Nennmoment wirkt, so wirkt dieses aufgeteilt auf Rotor, Generator und Differential-Antrieb entsprechend deren reduzierter Massenträgheitsmomente. Diese sind natürlich abhängig von den Massenverhältnissen der ausgeführten Windkraftanlage. Als realistisches Beispiel kann man bei Nennbetrieb einer 5MW-Windkraftanlage bezogen auf die Hauptbremse 15 etwa 1.900 $kgm^2$ für den Rotor 1, etwa 200 $kgm^2$ für den Synchrongenerator 8 und etwa 10 $kgm^2$ für den Differential-Antrieb 6 annehmen. Das heißt ein Großteil (etwa 90% bzw. 2,2-faches Rotor-Nennmoment) des Bremsmomentes wirkt auf die Rotorwelle der Windkraftanlage. Da nun bei der Ausführungsvariante gemäß Fig. 9 der Differential-Antrieb 6 im Drehmomenten-Fluss zwischen Hauptbremse 15 und Rotor 1 liegt, muss dieser, entsprechend den konstanten Drehmomentverhältnissen zwischen Rotor 1 und Differential-Antrieb 6, ebenfalls das etwa 2,2-fache Nennmoment halten. Gleiches gilt jedoch auch für das Auslegungsmoment der Bremse 20.

Ein wesentlicher Vorteil der Ausführungsvariante gemäß Fig. 7 ist, dass bei Einfall der Hauptbremse 15 deren Bremsmoment nicht über das Differentialgetriebe 3 auf den Massenträgheitsmoment-bestimmenden Rotor 1 wirkt. In diesem Fall wirken nur etwa 9,5% des Bremsmomentes auf den Generator 8 bzw. etwa 0,5% auf den Differential-Antrieb 6. Durch die gemäß Fig. 7 gezeigte Anordnung von Hauptbremse 15, Rotor 1 und Differentialgetriebe 3, ist daher ein Auslegungsmoment der Bremse 17 über das im Betrieb anstehenden Drehmoment des Differenzial-Antriebes 6 nicht erforderlich.

Da eine Vorrichtung zur Begrenzung der maximal auftretenden Drehzahl des Differenzial-Antriebes 6 unumgänglich ist, erhält man durch die beschriebene Vorrichtung eine wesentliche Erweiterung des Drehzahlbereiches und damit eine erhebliche Erhöhung des Jahresenergieertrages, ohne Mehrkosten zu verursachen.

Die oben beschriebenen Ausführungen sind bei technisch ähnlichen Anwendungen ebenfalls umsetzbar. Dies betrifft v.a. Wasserkraftwerke zur Ausnutzung von Fluss- und Meeresströmungen. Für diese Anwendung gelten die gleichen Grundvoraussetzungen wie für Windkraftanlagen, nämlich variable Strömungs-geschwindigkeit. Die Antriebswelle wird in diesen Fällen von den vom Strömungs-medium, beispielsweise Wasser, angetriebenen Einrichtungen direkt oder indirekt angetrieben. In weiterer Folge treibt die Antriebswelle direkt oder indirekt das Differenzialgetriebe an.

**Patentansprüche**

1. Differenzialgetriebe für eine Energiegewinnungsanlage, insbesondere für eine Windkraftanlage, mit drei An- bzw. Abtrieben, wobei ein erster Antrieb mit einer Antriebswelle der Energiegewinnungsanlage, ein Abtrieb mit einem mit einem Netz (10) verbindbaren Generator (8) und ein zweiter Antrieb mit einer elektrischen Maschine als Differenzial-Antrieb (6) verbunden ist, wobei der Generator (8) vom Netz (10) trennbar ist, **dadurch gekennzeichnet, dass** das Übersetzungsverhältnis des Differenzialgetriebes (3) auf 1 festlegbar ist, indem ein Antrieb mit dem anderen Antrieb oder mit dem Abtrieb drehfest verbindbar ist.

2. Differenzialgetriebe nach Anspruch 1, **dadurch gekennzeichnet, dass** ein Ritzel (11) mit einem Planetenträger (12) drehfest verbindbar ist.

3. Differenzialgetriebe nach Anspruch 1, **dadurch gekennzeichnet, dass** ein Ritzel (11) mit einem Hohlrad (13) drehfest verbindbar ist.

4. Differenzialgetriebe nach Anspruch 1, **dadurch gekennzeichnet, dass** ein Hohlrad (13) mit einem Planetenträger (12) drehfest verbindbar ist.

5. Differenzialgetriebe nach einem der Ansprüche 1 bis 4, **dadurch gekennzeichnet, dass** die drehfeste Verbindung eine Bremse (17, 20) oder Kupplung aufweist.

6. Differenzialgetriebe nach einem der Ansprüche 1 bis 5, **dadurch gekennzeichnet, dass** die drehfeste Verbindung eine Vorrichtung zum Verhindern einer Überdrehzahl des Differenzial-Antriebes (6) und/oder des Differenzialgetriebes (3) ist.

7. Differenzialgetriebe nach Anspruch 1, **dadurch gekennzeichnet, dass** ein Planetenrad eines Planetenträgers (12) mittels einer Blockiereinrichtung blockierbar ist.

8. Differenzialgetriebe nach Anspruch 7, **dadurch gekennzeichnet, dass** die Blockiereinrichtung eine Bremse oder Kupplung ist.

9. Differenzialgetriebe nach Anspruch 7 oder 8, **dadurch gekennzeichnet, dass** die Blockiereinrichtung als Vorrichtung zum Verhindern einer Überdrehzahl des Differenzial-Antriebes (6) und/oder des Differenzialgetriebes (3) ist.

10. Differenzialgetriebe nach einem der Ansprüche 1 bis 9, **dadurch gekennzeichnet, dass** das Differenzialgetriebe (3) ein einstufiges Planetengetriebe ist.

11. Differenzialgetriebe nach einem der Ansprüche 1 bis 10, **dadurch gekennzeichnet, dass** eine Hauptbremse (15) auf den ersten Antrieb wirkt.

12. Differenzialgetriebe nach einem der Ansprüche 1 bis 11, **dadurch gekennzeichnet, dass** der Differenzial-Antrieb (6) als Generator betrieben wird, während der Generator (8) vom Netz (10) getrennt ist.

13. Verfahren zum Betreiben eines Differentialgetriebes für eine Energiegewinnungsanlage, insbesondere für eine Windkraftanlage, mit drei An- bzw. Abtrieben, wobei ein erster Antrieb mit einer Antriebswelle der Energiegewinnungsanlage, ein Abtrieb mit einem mit einem Netz (10) verbindbaren Generator (8) und ein zweiter Antrieb mit einer elektrischen Maschine (6) als Differential-Antrieb verbunden ist, **dadurch gekennzeichnet, dass** von einer Betriebsart, bei der sowohl der Generator (8) als auch der Differenzial-Antrieb (6) mit dem Netz (10) verbunden sind, derart in eine andere Betriebsart, bei welcher der Generator (8) vom Netz (10) getrennt und der Differenzial-Antrieb (6) mit dem Netz (10) verbunden ist, umgeschaltet wird, dass zuerst die Leistung der Energiegewinnungsanlage auf Null geregelt wird, anschließend der Generator (8) vom Netz getrennt wird, dann die Drehzahl des Differenzial-Antriebes (6) auf die Drehzahl der Rotorwelle (18) des Generators (8) gebracht wird, anschließend das Übersetzungsverhältnis des Differenzialgetriebes (3) auf 1 festlegt wird und schließlich die Leistung der Energiegewinnungsanlage wieder erhöht wird.

14. Verfahren zum Betreiben eines Differentialgetriebes für eine Energiegewinnungsanlage, insbesondere für eine Windkraftanlage, mit drei An- bzw. Abtrieben, wobei ein erster Antrieb mit einer Antriebswelle der Energiegewinnungsanlage, ein Abtrieb mit einem mit einem Netz (10) verbindbaren Generator (8) und ein zweiter Antrieb mit einer elektrischen Maschine (6) als Differential-Antrieb verbunden ist, **dadurch gekennzeichnet, dass** von einer Betriebsart, bei welcher der Generator (8) vom Netz (10) getrennt, der Differenzial-Antrieb (6) mit dem Netz (10) verbunden und das Übersetzungsverhältnis des Differenzialgetriebes (3) auf 1 festlegt ist, derart in eine andere Betriebsart, bei der sowohl der Generator (8) als auch der Differenzial-Antrieb (6) mit dem Netz (10) verbunden sind, umgeschaltet wird, dass zuerst die Leistung der Energiegewinnungsanlage auf Null geregelt wird, anschließend die Festlegung des Übersetzungsverhältnisses des Differenzialgetriebes (3) auf 1 aufgehoben wird, dann der Generator (8) mittels des Differenzial-Antriebes (6) mit dem Netz synchronisiert wird, anschließend der Generator (8) mit dem Netz (10) verbunden wird und schließlich die Leistung der Energiegewinnungsanlage wieder erhöht wird.

**Claims**

1. A differential transmission for a power generation facility, in particular for a wind power turbine, having three input and/or output drives, wherein a first input drive is connected to an input drive shaft of the power generation facility, an output drive is connected to a generator (8) that can be connected with a grid (10), and a second input drive is connected to an electrical machine that is a differential drive (6), wherein the generator (8) can be separated from the grid (10), **characterised in that** the transmission ratio of the differential transmission (3) can be set at 1, **in that** an input drive can be connected torsionally strong with the other input drive, or with the output drive.

2. The differential transmission in accordance with claim 1, **characterised in that** a pinion (11) can be connected torsionally strong to a planetary carrier (12).

3. The differential transmission in accordance with claim 1, **characterised in that** a pinion (11) can be connected torsionally strong to a ring gear (13).

4. The differential transmission in accordance with claim 1, **characterised in that** a ring gear (13) can be connected torsionally strong to a planetary carrier (12).

5. The.differential transmission in accordance with one of the claims 1 to 4, **characterised in that** the torsionally strong connection comprises a brake (17, 20) or a clutch.

6. The differential transmission in accordance with one of the claims 1 to 5, **characterised in that** the torsionally strong connection is a device that prevents an overspeed of the differential drive (6) and/or of the differential transmission (3).

7. The differential transmission in accordance with claim 1, **characterised in that** a planet gear of a planetary carrier (12) can be blocked by means of a locking device.

8. The differential transmission in accordance with claim 7, **characterised in that** the blocking device is a brake or a clutch.

9. The differential transmission in accordance with claim 7 or 8, **characterised in that** the locking device is a device for preventing an overspeed of the differential drive (6) and/or of the differential transmission (3).

10. The differential transmission in accordance with one of the claims 1 to 9, **characterised in that** the differential transmission (3) is a single stage planetary transmission.

11. The differential transmission in accordance with one of the claims 1 to 10, **characterised in that** a main brake (15) acts on the first input drive.

12. The differential transmission in accordance with one of the claims 1 to 11, **characterised in that** the differential drive (6) is operated as a generator, while the generator (8) is separated from the grid (10).

13. A method for operating of a differential transmission for a power generation facility, in particular for a wind power turbine, having three input and/or output drives, wherein a first input drive is connected to an input drive shaft of the power generation facility, an output drive is connected to a generator (8) that can be connected to a grid (10), and a second input drive is connected to an electrical machine (6) that is a differential drive, **characterised in that** it is switched from one mode of operation, in which both the generator (8) and the differential drive (6) are connected to the grid (10) into another mode of operation in which the generator (8) is separated from the grid (10) and the differential drive (6) is connected to the grid (10), such that firstly the power of the power generation facility is controlled to zero, then the generator (8) is separated from the grid, then the rotational speed of the differential drive (6) is brought up to the rotational speed of the rotor shaft (18) of the generator (8), then the transmission ratio of the differential transmission (3) is set to 1, and finally the power of the power generation facility is increased again.

14. A method for operating of a differential transmission for a power generation facility, in particular for a wind power turbine, having three input and/or output drives, wherein a first input drive is connected to an input drive shaft of the power generation facility, an output drive is connected to a generator (8) that can be connected to a grid (10), and a second input drive is connected to an electrical machine (6) that is a differential drive, **characterised in that** it is switched from one mode of operation, in which the generator (8) is separated from the grid (10), the differential drive (6) is connected to the grid (10) and the transmission ratio of the differential transmission (3) is set to 1 into another mode of operation in which both the generator (8) and the differential drive (6) are connected to the grid (10), such that firstly the power of the power generation plant is controlled to zero, then the setting of the transmission ratio of the differential transmission (3) to 1 is cancelled, then the generator (8) is synchronised to the grid by means of the differential drive (6), then the generator (8) is connected to the grid (10), and finally the power of the power generation plant is increased again.

## Revendications

1. Engrenage différentiel pour une installation de production d'énergie, en particulier pour une éolienne, avec trois entrées ou de sorties, une premier entrée étant relié à un arbre d'entraînement de l'installation de production d'énergie, une sortie étant relié à un générateur (8) pouvant être relié à un réseau (10), et une deuxième entrée étant relié à une machine électrique en tant qu'entraînement du différentiel (6), le générateur (8) pouvant être coupé du réseau (10), **caractérisé en ce que** le rapport de transmission de l'engrenage différentiel (3) peut être fixé à 1 **en ce qu'**une entrée peut être relié en solidarité de rotation à l'autre entrée ou à la de sortie.

2. Engrenage différentiel selon la revendication 1, **caractérisé en ce qu'**un pignon (11) peut être relié en solidarité de rotation à un porte-satellites (12).

3. Engrenage différentiel selon la revendication 1, **caractérisé en ce qu'**un pignon (11) peut être relié en solidarité de rotation à une roue à denture intérieure (13).

4. Engrenage différentiel selon la revendication 1, **caractérisé en ce qu'**une roue à denture intérieure (13) peut être reliée en solidarité de rotation à un porte-satellites (12).

5. Engrenage différentiel selon l'une des revendications 1 à 4, **caractérisé en ce que** la liaison solidaire en rotation présente un frein (17, 20) ou un accouplement.

6. Engrenage différentiel selon l'une des revendications 1 à 5, **caractérisé en ce que** la liaison solidaire en rotation est un dispositif pour empêcher un surrégime de l'entraînement du différentiel (6) et/ou de l'engrenage différentiel (3).

7. Engrenage différentiel selon la revendication 1, **caractérisé en ce qu'**un satellite d'un porte-satellites,(12) peut être bloqué au moyen d'un dispositif de blocage.

8. Engrenage différentiel selon la revendication 7, **caractérisé en ce que** le dispositif de blocage est un frein ou un accouplement.

9. Engrenage différentiel selon la revendication 7 ou 8, **caractérisé en ce que** le dispositif de blocage est réalisé en tant que dispositif pour empêcher un surrégime de l'entraînement du différentiel (6) et/ou de l'engrenage différentiel (3).

10. Engrenage différentiel selon l'une des revendications 1 à 9, **caractérisé en ce que** l'engrenage différentiel (3) est un engrenage planétaire à un étage.

11. Engrenage différentiel selon l'une des revendications 1 à 10, **caractérisé en ce qu'**un frein principal (15) agit sur la premier entrée.

12. Engrenage différentiel selon l'une des revendications 1 à 11, **caractérisé en ce que** l'entraînement du différentiel (6) est exploité en tant que générateur alors que le générateur (8) est coupé du réseau (10).

13. Procédé pour exploiter un engrenage différentiel pour une installation de production d'énergie, en particulier pour une éolienne, avec trois entrées ou de sorties, une premier entrée étant relié à un arbre d'entraînement de l'installation de production d'énergie, une sortie étant relié à un générateur (8) pouvant être relié à un réseau (10), et une deuxième entrée étant relié à une machine électrique (6) en tant qu'entraînement du différentiel, caractérisé en ce g'il est commutée d'un mode d'exploitation où le générateur (8) tout comme également l'entraînement du différentiel (6) sont reliés au réseau (10), à un autre mode d'exploitation où le générateur (8) est coupé du réseau (10) et où l'entraînement du différentiel (6) est relié au réseau (10) de manière à ce que tout d'abord la puissance de l'installation de production d'énergie soit réglée à zéro, le générateur (8) étant ensuite coupé du réseau, le nombre de tours de l'entraînement du différentiel (6) étant ensuite amené au nombre de tours de l'arbre de rotor (18) du générateur (8), le rapport de transmission de l'engrenage différentiel (3) étant ensuite fixé à 1 et la puissance de l'installation de production d'énergie étant enfin de nouveau élevée.

14. Procédé pour exploiter un engrenage différentiel pour une installation de production d'énergie, en particulier pour une éolienne, avec trois entrées ou de sorties, une premier entrée étant relié à un arbre d'entraînement de l'installation de production d'énergie, une sortie étant relié à un générateur (8) pouvant être relié à un réseau (10), et une deuxième entrée étant relié à une machine électrique (6) en tant qu'entraînement du différentiel, caractérisé en ce g'il est commutée d'un mode d'exploitation où le générateur (8) est coupé du réseau (10), où l'entraînement du différentiel (6) est relié au réseau (10) et où le rapport de transmission de l'engrenage différentiel (3) est fixé à 1, à un autre mode d'exploitation où le générateur (8) tout comme également l'entraînement du différentiel (6) sont reliés au réseau (10), de manière à ce que tout d'abord la puissance de l'installation de production d'énergie soit réglée à 1, la fixation du rapport de transmission de l'engrenage différentiel (3) à 1 étant ensuite annulée, le générateur (8) étant ensuite synchronisé avec le réseau au moyen de l'entraînement du différentiel (6), le générateur (8) étant ensuite relié au réseau (10) et la puissance de l'installation de production d'énergie étant enfin de nouveau élevée.

**Fig.1**

**Fig. 2**

**Fig. 3**

## Fig. 4

-/+ Nenn-Drehzahlbereich des Rotors (realisierbar mit Nenndrehzahl des Differential-Antriebes)

Legend:
- n(max) ohne Lastreduktion [rpm]
- n(rated) [rpm]
- n(min) [rpm]
- M(max) [kNm]
- Grunddrehzahl [rpm]
- n(min-maxP) [rpm]

## Fig. 5

Windgeschwindigkeit [m/s]

Legend:
- Drehzahl(Diff.-Eingang) [rpm]
- Drehzahl(Diff.-Antrieb) [rpm]
- Leistung(Diff.-Antrieb) [kW]
- Drehzahl(Generator) [rpm]
- Leistung(Generator) [kW]
- Leistung(gesamt) [kW]

## Fig. 6

-/+ Nenn- Drehzahlbereich des Rotors (realisierbar mit Nenndrehzahl des Differential-Antriebes)

Legend:
- 6.5 m/s
- 7.5 m/s
- 8.5 m/s
- 10.0 m/s

**Fig. 7**

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006010190 A1
- US 2008054643 A1
- WO 2009016508 A2
- WO 2004109157 A1
- EP 1283359 A1